# EUROPÄISCHE PATENTSCHRIFT

(11) **EP 1 196 506 B1**
(45) Veröffentlichungstag und Bekanntmachung des Hinweises auf die Patenterteilung: **08.06.2005**
(21) Anmeldenummer: 00949299.2
(22) Anmeldetag: 11.07.2000
(51) Int. Cl.: C09D 17/00, C09D 5/44

(54) **PIGMENTPASTEN, DEREN HERSTELLUNG UND DIESE ENTHALTENDE KATHODISCH ABSCHEIDBARE ÜBERZUGSMITTEL**
PIGMENT PASTES, PRODUCTION THEREOF AND COATING AGENTS THAT CAN BE CATHODICALLY DEPOSITED, CONTAINING SAID PIGMENT PASTES
PATES PIGMENTAIRES, LEUR PRODUCTION, ET MATERIAUX DE REVETEMENT POUVANT ETRE DEPOSES PAR VOIE CATHODIQUE, CONTENANT CES PATES PIGMENTAIRES

(30) Priorität: 15.07.1999 DE 19933094
(43) Veröffentlichungstag der Anmeldung: 17.04.2002
(73) Patentinhaber: E.I. DU PONT DE NEMOURS AND COMPANY, Wilmington, Delaware 19898 (US)
(72) Erfinder: KLEIN, Klausjörg, D-42289 Wuppertal (DE)
(74) Vertreter: Gille Hrabal Struck Neidlein Prop Roos
(86) Internationale Anmeldenummer: PCT/EP2000/006551
(87) Internationale Veröffentlichungsnummer: WO 2001/005900

(56) Entgegenhaltungen:
- EP-A- 0 199 473
- EP-A- 0 352 677
- PATENT ABSTRACTS OF JAPAN vol. 1999, no. 10, 31. August 1999 (1999-08-31) & JP 11 140353 A (NIPPON PAINT CO LTD), 25. Mai 1999 (1999-05-25)

## Beschreibung

Die Erfindung betrifft eine zur Herstellung kathodisch abscheidbarer Elektrotauchlacküberzugsminel (KTL) geeignete Pigmentpaste, Verfahren zu ihrer Herstellung, ihre Verwendung zur Herstellung von KTL-Überzugsmitteln sowie die so hergestellten KTL-Überzugsmittel.

Die Neuerstellung bzw. die Festkörperkompensation von KTL-Bädern beim Anwender mittels einkomponentiger Konzentrate ist bekannt. Diese Konzentrate werden hergestellt durch Anreiben der Pigmente und Füllstoffe in der organischen Lösung eines KTL-Bindemittels, Neutralisation mit Säure und im allgemeinen Verdünnen mit Wasser. Die Konzentrate werden beim Anwender im Regelfall mit einem Festkörpergehalt von über 50 Gew.-% und einem Lösemittelgehalt zwischen 20 und 40 Gew.-% angeliefert. Die Konzentrate sind lagerstabil und besitzen hohe Viskositäten. Beim Anwender müssen sie bei der Neuerstellung eines KTL-Bades mit Wasser oder im Falle der Festkörperkompensation mit an Festkörper verarmtem KTL-Badinhalt vermischt werden.

Als technologisch günstigere Variante zu den einkomponentigen KTL-Konzentraten sind zweikomponentige KTL-Materialien entwickelt worden, aus denen beim Anwender KTL-Bäder durch Verdünnen mit Wasser neuerstellt werden oder womit eine Festkörperkompensation durch Vermischen mit an Festkörper verarmtem KTL-Badinhalt durchgeführt werden kann. Bei zweikomponentigen KTL-Materialien handelt es sich um a) eine Bindemittelkomponente in Form einer lösemittelfreien oder lösemittelarmen, wäßrigen Dispersion des KTL-Bindemittels und gegebenenfalls vorhandenen Vernetzers (KTL-Dispersion) und b) eine separate Pigmentpaste, welche im allgemeinen hergestellt wird durch Anreiben der Pigmente und Füllstoffe in einem wäßrigen, kationischen Pastenharz. Bei beiden Komponenten handelt es sich um mit Säure neutralisierte wäßrige Systeme, die mit dem KTL-Badinhalt verträglich sind. Das Verdünnen mit Wasser oder an Festkörper verarmtem KTL-Badinhalt erfolgt beispielsweise durch separate, aber parallele Zudosierung beider Komponenten zum Wasser oder an Festkörper verarmten KTL-Bad.

Zur Herstellung von KTL-Überzugsmitteln verwendbare Pigmentpasten, die hergestellt werden können durch Anreiben von Pigmenten in quaternäre Ammoniumgruppen aufweisenden Pastenharzen, sind bekannt, beispielsweise aus EP-A-0 107 088, EP-A-0 107 089, EP-A-0 107 098, EP-A-0 173 214, EP-A-0 350 618, EP-A-0 352 677. Mit derartigen Pigmentpasten hergestellte KTL-Überzugsmittel zeichnen sich im Vergleich zu mit anderen Pigmentpasten hergestellten KTL-Überzugsmitteln durch niedrigere Gehalte an titrierbarer Säure aus.

Aufgabe der Erfindung ist die Bereitstellung von zur Herstellung von kathodisch abscheidbaren Elektrotauchlacken nach dem Zweikomponentenverfahren einsetzbaren Pigmentpasten, die einfach hergestellt werden können und sedimentationsstabil sind. Aus den unter Verwendung der Pigmentpasten hergestellten KTL-Überzugsmitteln sollen auf elektrisch leitfähigen Substraten gegen Oberflächenstörungen unempfindliche KTL-Überzüge mit guter Kantenabdeckung, auch bei niedriger Pigmentierung der KTL-Überzugsmittel, abgeschieden werden können.

Es hat sich gezeigt, daß diese Aufgabe gelöst werden kann, wenn man einem wäßrigen Pastenharz, das tertiär gebundenen Aminostickstoff enthält, in Gegenwart von Pigmenten und/oder Füllstoffen Epoxidverbindungen und gegebenenfalls Säure zusetzt.

Gegenstand der Erfindung sind daher Pigmentpasten, die erhältlich sind durch Dispergieren von Pigmenten und/oder Füllstoffen in einem wäßrigen Pastenharz, das tertiär gebundenen Aminostickstoff enthält, dadurch gekennzeichnet, daß auschließend au das Dispergieren Polyepoxidverbindungen und, falls nicht bereits geschehen, Säure zugesetzt werden.

Die Erfindung betrifft auch ein Verfahren zur Herstellung der wäßrigen Pigmentpasten, bei dem man Pigmente und/oder Füllstoffe in einem wäßrigen Pastenharz, das tertiär gebundenen Aminostickstoff enthält, dispergiert und das dadurch gekennzeichnet ist, daß auschließend an das Dispergieren Polyepoxidverbindungen und, falls nicht bereits geschehen, Säure zugesetzt werden.

Der Begriff "Pastenharz" bedeutet, daß es sich um ein zur Dispergierung von Pigmenten und/oder Füllstoffen einsetzbares Harz handelt; er umfaßt KTL-Bindemittel, die Gruppen mit tertiär gebundenem Aminostickstoff aufweisen und Bestandteil von KTL-Dispersionen sein können. Der Gehalt an tertiär gebundenem Aminostickstoff beträgt beispielsweise 35 bis 300 Milliäquivalente pro 100 g Pastenfestharz. Neben den notwendigen Gruppen mit tertiär gebundenem Aminostickstoff können die Pastenharze auch Gruppen mit primär und/oder sekundär gebundenem Aminostickstoff und/oder quaternäre Ammoniumgruppen enthalten. Bevorzugt handelt es sich bei den zur Herstellung der erfindungsgemäßen Pigmentpasten eingesetzten Pastenharzen nicht um in KTL-Dispersionen enthaltene KTL-Bindemittel, sondern um davon verschiedene Dispergierharze. Beispiele für Pastenharze mit Gruppen mit tertiär gebundenem Aminostickstoff sind entsprechende Gruppen enthaltende Amino(meth)acrylatharze, Aminopolyurethanharze oder bevorzugt Aminoepoxidharze, bei denen ein Teil oder sämtliche Epoxidgruppen durch Umsetzung mit Kohlendioxid in fünfgliedrige cyclische Carbonatgruppen überführt worden sein können. Bei den Gruppen mit tertiär gebundenem Aminostickstoff handelt es sich um tertiäre Aminogruppen, die im Polymerrückgrat und/oder als laterale und/oder als terminale Gruppen des Pastenharzes vorliegen können, z.B. in Form von Di(cyclo)alkylaminogruppen mit z.B. C₁ bis C₁₈ Alkylgruppen, die gleich oder verschieden sein können. Der Begriff "tertiäre Aminogruppen" schließt stickstoffheterocyclische Gruppen, die tertiär gebundenen Aminostickstoff als Ringglied enthalten, ausdrücklich ein.

Amino(meth)acrylatharze mit tertiären Aminogruppen können beispielsweise durch radikalische Copolymerisation olefinisch ungesättigter Monomerer mit tertiären Aminogruppen (beispielhaft sei hier nur Dimethylaminoethyl(meth)acrylat genannt) mit olefinisch ungesättigten Comonomeren hergestellt werden. Eine alternative Herstellungsweise für Amino(meth)acrylatharze besteht in der Addition sekundärer Monoamine an epoxidfunktionelle (Meth)acrylcopolymere.

Aminopolyurethanharze mit tertiären Aminogruppen können beispielsweise durch Additionsreaktion von Polyisocyanaten, tertiären Alkoholaminen und Polyolen hergestellt werden.

Die bevorzugten Aminoepoxidpastenharze mit tertiären Aminogruppen können beispielsweise durch Umsetzung von Epoxidharzen mit primären und/oder sekundären Mono- und/oder Polyaminen in organischer Lösung oder in der Schmelze hergestellt werden. Wird in organischer Lösung gearbeitet, so können als Lösemittel oder Lösemittelgemische wassermischbare Lösemittel, beispielsweise Alkohole wie Isopropanol, Isobutanol, n-Butanol; Glykolether wie Methoxypropanol, Butoxyethanol; Glykoletherester wie Butylglykolacetat oder mit Wasser nicht mischbare Lösemittel wie Xylol verwendet werden. Bei Epoxidharzen handelt es sich insbesondere um epoxidgruppenhaltige aromatische Polyglycidylether. Der Begriff "Epoxidharze" soll im Rahmen der vorliegenden Erfindung auch solche Epoxidharzderivate umfassen, bei denen ein Teil der oder sämtliche Epoxidgruppen, beispielsweise Epoxidgruppen von epoxidgruppenhaltigen aromatischen Polyglycidylethern durch Umsetzung mit Kohlendioxid in 5-gliedrige cyclische Carbonatgruppen überführt worden sind. Aromatische Polyglycidylether gehen primär aus der Reaktion von Polyphenolen, bevorzugt Diphenolen und insbesondere mehrkernigen Diphenolen mit Epichlorhydrin hervor. Die an sich aromatischen Polyglycidylether können auch aliphatische Anteile enthalten. Bevorzugt basieren sie jedoch ausschließlich auf Diphenolen. Zur Synthese von Aminoepoxidpastenharzen werden als Epoxidharze bevorzugt solche eingesetzt, die oder deren Mischung ein Epoxid- und/oder Cyclocarbonat-Äquivalentgewicht zwischen 170 und 1000 aufweisen. Besonders bevorzugte aromatische Epoxidharze sind dabei die üblichen käuflichen Epoxidharze, die primär aus der Reaktion von Diphenylolpropan (Bisphenol A) mit Epichlorhydrin hervorgehen. Die Monound/oder Polyamine können neben den primären und/oder sekundären Aminogruppen auch weitere funktionelle Gruppen enthalten, insbesondere Hydroxylgruppen und/oder tertiäre Aminogruppen. Beispiele für Mono- und/oder Polyamine mit primären und/oder sekundären Aminogruppen sowie gegebenenfalls weiteren funktionellen Gruppen sind Methylamin, Ethylamin, Propylamin, Butylamin, Octylamin, 2-Ethylhexylamin, Dimethylamin, Diethylamin, Dipropylamin, Dibutylamin, Methylbutylamin, Morpholin, Diethylaminoethylamin, Dimethylaminopropylamin, Laurylpropylendiamin, Diethylentriamin, N,N'-Bis-(isohexyl)-1,6-diaminohexan, Ethanolamin, Propanolamin, Ethylenglykol(2-amino-ethyl)ether, N-Methylaminoethanol oder Diethanolamin, 1:2-Addukte aus diprimärem Amin wie 1,6-Diaminohexan oder 2-Methylpentamethylendiamin und Monoepoxid wie Glycidylether, Glycidylester oder Monoepoxyalkane.

Die Herstellung der Aminoepoxidpastenharze erfolgt so, daß kein freies Amin verbleibt, bevorzugt unter vollständigem Verbrauch der Epoxid- und/oder cyclischen Carbonatgruppen des aromatischen Epoxidharz(derivat)es. Die primären bzw. sekundären Aminogruppen der Mono- und/oder Polyamine können dabei teilweise oder vollständig zu tertiären Aminogruppen umgesetzt werden. Im Aminoepoxidpastenharz gegebenenfalls verbliebene sekundäre Aminogruppen können durch weitere chemische Umsetzungen in Gruppen mit tertiär gebundenem Aminostickstoff überführt werden, beispielsweise durch Michael-Addition an aktivierte olefinische Doppelbindungen, durch Alkylolierung mit Monoepoxiden oder mit Aldehyden. Im Gefolge derartiger Reaktionen können sich gegebenenfalls weitere Reaktionen anschließen, beispielsweise Ringschlußreaktionen, bei denen der tertiär gebundene Aminostickstoff beispielsweise zu einem Ringglied eines stickstoffhaltigen Heterocyclus wird. Als ein Beispiel für ein derartiges heterocyclisches Ringsystem sei der Oxazolidinring genannt, wie er beispielsweise erhalten werden kann durch Methylolierung einer in beta-Stellung zu einer Hydroxylgruppe befindlichen sekundären Aminogruppe (beispielsweise aus der Addition einer primären Aminogruppe an eine Epoxidgruppe hervorgegangenes Strukturelement) mit Formaldehyd und anschließendem Ringschluß zum Oxazolidinring unter Wasserabspaltung.

Die Aminoepoxidpastenharze mit tertiär gebundenem Aminostickstoff weisen beispielsweise einen Gehalt an Aminogruppen von 35 bis 360 Milliäquivalenten pro 100 g Festharz auf. Der Gehalt an tertiären Aminogruppen, die als Substituenten und/oder als Bestandteil des Polymerrückgrats im Aminoepoxidpastenharz vorliegen können, beträgt beispielsweise 35 bis 300 Milliäquivalente pro 100 g Festharz. Besonders bevorzugt enthalten die Aminoepoxidpastenharze neben den tertiären Aminogruppen keine weiteren Aminogruppen, wie beispielsweise primäre und/oder sekundäre Aminogruppen. Die Aminoepoxidpastenharze können quaternäre Ammoniumgruppen enthalten. Die Aminoepoxidpastenharze enthalten im allgemeinen Hydroxylgruppen beispielsweise entsprechend einer Hydroxylzahl zwischen 40 und 300 mg KOH/g Festharz. Diese Hydroxylgruppen können nicht, teilweise oder vollständig umgesetzt sein, beispielsweise urethanisiert sein. Die Aminoepoxidpastenharze können chemische Modifizierungen aufweisen. Beispielsweise können die Aminoepoxidpastenharze Urethangruppen, Polyethergruppen oder Polyamidgruppen enthalten. Die zahlenmittleren Molekulargewichte (Mn) der Aminoepoxidpastenharze betragen beispielsweise zwischen 1000 und 10000. Nicht als Einschränkung zu verstehende Beispiele für erfindungsgemäß brauchbare, in KTL-Bädern verwendbare Aminoepoxidpastenharze mit tertiär gebundenem Aminostickstoff, sind die in EP-A-0 183 025 und in EP-A-0 469 497 beschriebenen.

Bevorzugt wird der tertiär gebundene Aminostickstoff der als Schmelze oder als organische Lösung vorliegenden Pastenharze mit Säure, bevorzugt mit Carbonsäuren oder Sulfonsäuren beispielsweise entsprechend einem Neutralisationsgrad von beispielsweise 10 bis 90 % neutralisiert. Dies kann bei erhöhten Temperaturen von beispielsweise 30 bis 140, bevorzugt von 30 bis 90 °C geschehen. Beispiele für geeignete Carbonsäuren sind Ameisensäure, Essigsäure und Milchsäure. Beispiele für geeignete Sulfonsäuren sind Amidosulfonsäure oder organische Sulfonsäuren wie N-Alkylamidosulfonsäuren; Alkansulfonsäuren wie Methansulfonsäure. Die bevorzugt neutralisierten Pastenharze werden durch Zugabe von Wasser in die wäßrige Phase überführt. Gegebenenfalls enthaltenes organisches Lösemittel kann bis zum gewünschten Gehalt entfernt werden, beispielsweise durch Destillation im Vakuum. Die wäßrigen Pastenharze weisen einen Festkörpergehalt von beispielsweise 25 bis 50 Gew.-% auf.

Erfindungsgemäß kann die Säure auch dem wäßrigen Pastenharz vor oder nach dem Zusatz der Pigmente und/oder Füllstoffe zugesetzt werden. Bevorzugt erfolgt der Säurezusatz vor dem Zusatz der Epoxidverbindungen. Es ist erfindungswesentlich, daß dem wäßrigen Pastenharz in Gegenwart der Pigmente und/oder Füllstoffe Epoxidverbindungen zugesetzt werden, wobei der tertiäre Aminostickstoff durch Neutralisation mit Säure protoniert ist oder wird. Der Zusatz der Epoxidverbindungen erfolgt bevorzugt in einer 15 bis 80, bevorzugt 20 bis 60 Milliäquivalenten Epoxid pro 100 g der Mischung aus Pastenharz und Epoxidverbindungen entsprechenden Menge. Es ist bevorzugt, wenn das Verhältnis der Epoxidäquivalente der zugesetzten Epoxidverbindungen zu den Säureäquivalenten kleiner oder gleich 1 : 1 ist. Gleiches gilt für das Verhältnis der Epoxidäquivalente der zugesetzten Epoxidverbindungen zu den Tertiäraminäquivalenten. Der Zusatz der Epoxidverbindungen kann vor, während und/oder nach dem Dispergieren der Pigmente und/oder Füllstoffe erfolgen. Bevorzugt ist der Zusatz nach dem Dispergieren.

Nach dem Zusatz der Epoxidverbindungen kommt es zu einem Verbrauch der Epoxidgruppen. Der Zusatz der Epoxidverbindungen erfolgt in Gegenwart der Pigmente und/oder Füllstoffe. Es ist bevorzugt, daß Pigmente und/oder Füllstoffe zunächst im Pastenharz dispergiert werden und erst danach der Verbrauch der Epoxidgruppen der zugesetzten Epoxidverbindungen erfolgt oder zu Ende geführt wird. Insbesondere ist es bevorzugt, daß die Epoxidverbindungen erst nach beendetem Dispergieren zugesetzt werden. Beispielsweise können die Epoxidverbindungen nach beendetem Dispergieren zugesetzt und gut untergemischt werden, wobei der anschließend stattfindende Verbrauch der Epoxidgruppen der zugesetzten Epoxidverbindungen durch geeignete Maßnahmen unterstützt werden kann, wie beispielsweise Erwärmen, beispielsweise auf 30 bis 90 °C und/oder Rühren. Bevorzugt ist es jedoch, auf unterstützende Maßnahmen zu verzichten und den Verbrauch der Epoxidgruppen während der anschließenden Lagerung stattfinden zu lassen. Im allgemeinen ist der Verbrauch der Epoxidgruppen während der Lagerung innerhalb der ersten 24 Stunden abgeschlossen.

Es wird angenommen, daß der Verbrauch der Epoxidgruppen der dem wäßrigen Pastenharz in Gegenwart von Pigmenten und/oder Füllstoffen zugesetzten Epoxidverbindungen auf eine Quaternisierung protonierter tertiärer Aminogruppen des Pastenharzes zurückzuführen ist.

Bei den Epoxidverbindungen kann es sich um Mono- und/oder Polyepoxidverbindungen handeln, die einzeln oder im Gemisch eingesetzt werden können. Polyepoxidverbindungen sind bevorzugt. Beispiele für Monoepoxide sind Glycidylether, Glycidylester oder Monoepoxyalkane. Die bevorzugten Polyepoxide besitzen im Durchschnitt mehr als eine, bevorzugt zwischen 1,5 und 3 Epoxidgruppen pro Molekül. Besonders bevorzugt handelt es sich um Diepoxide. Bei den Polyepoxiden kann es sich um niedermolekulare, definierte Verbindungen handeln oder es handelt sich um oligomere oder polymere Verbindungen. Bevorzugt liegen die Epoxidäquivalentgewichte der Polyepoxide von 87 bis 500. Beispiele für Polyepoxide sind Polyglycidylether von mehrfunktionellen Alkoholen oder mehrfunktionellen Phenolen, insbesondere Diolen und/oder Diphenolen wie z.B. hydrierte Bisphenol-A-Glycidylether, Hexandioldiglycidylether, Glycerintriglycidylether, Diglycidylhexahydrophthalat, Diglycidylester von Dimersäuren, epoxidierte Derivate des (Methyl)cyclohexens, wie z.B. 3,4-Epoxycyclohexyl-methyl-(3,4-epoxycyclohexan)carboxylat, epoxidfunktionelle Poly(meth)acrylatharze, Polyalkylenglykoldiglycidylether oder epoxidiertes Polybutadien. Bevorzugte Polyepoxide sind aromatische Epoxidharze, wie sie primär aus der Reaktion von Polyphenolen, bevorzugt Diphenolen und insbesondere mehrkernigen Diphenolen mit Epichlorhydrin hervorgehen. Besonders bevorzugte aromatische Epoxidharze sind dabei die üblichen käuflichen Epoxidharze, die primär aus der Reaktion von Diphenylolpropan (Bisphenol A) mit Epichlorhydrin hervorgehen.

Die Pigmente und/oder Füllstoffe werden im wäßrigen Pastenharz, das tertiären Aminostickstoff, der vor der Zugabe der Epoxidverbindungen mit Säure protoniert wird, enthält, nach, während und/oder vor der Zugabe der Epoxidverbindungen dispergiert. Bevorzugt wird vor der Zugabe der Epoxidverbindungen dispergiert. Das Dispergieren oder Anreiben der Pigmente und/oder Füllstoffe kann unter Verwendung in der Lackproduktion üblicher Aggregate und Arbeitsverfahren erfolgen, beispielsweise unter Verwendung von Dissolvern und/oder Perlmühlen.

Beispiele für Pigmente sind die üblichen anorganischen und/oder organischen Buntpigmente wie z.B. Titandioxid, Eisenoxidpigmente, Ruß, Phthalocyaninpigmente, Chinacridonpigmente aber auch Korrosionsschutzpiamente, wie Zinkphosphat oder Bleisilikat. Der Begriff "Pigmente" schließt pulverförmige Katalysatoren, wie beispielsweise Dibutylzinnoxid, Bleioxid, Wismutoxid ausdrücklich ein. In vielen Fällen ist es bevorzugt, pulverförmige Katalysatoren wie beispielsweise Dibutylzinnoxid, Bleioxid, Wismutoxid in Form eines sauren Aufschlusses bei der Dispergierung einzusetzen. Ein Beispiel für einen sauren Aufschluß von Dibutylzinnoxid liefert die EP-0 436 135 A1. Beispiele für Füllstoffe sind Kaolin, Talkum oder Siliciumdioxid.

Katalysatorpulver können separat zu Katalysatorpasten oder gemeinsam mit Pigmenten und/oder Füllstoffen zu Katalysator enthaltenden Pigmentpasten dispergiert werden. Im Falle der vorstehend erwähnten sauren Aufschlüsse pulverförmiger Katalysatoren ergibt sich die Möglichkeit, den vor dem Zusatz der Epoxidverbindungen notwendigen Säurezusatz teilweise oder sogar vollständig mittels eines solchen sauren Aufschlusses zu bewirken.

Die Herstellung der erfindungsgemäßen Pigmentpasten ist einfach, insbesondere wenn das Dispergieren der Pigmente und/oder Füllstoffe in an sich bekannten, tertiär gebundenen Aminostickstoff aufweisenden wäßrigen Pastenharzen erfolgt und nach beendeter Dispergierung Epoxidverbindungen zugesetzt und gut untergemischt werden und der Verbrauch der Epoxidgruppen der zugesetzten Epoxidverbindungen während der anschließenden Lagerung der so hergestellten Pigmentzubereitung erfolgt, praktisch im Sinne einer Reifung zur erfindungsgemäßen Pigmentpaste.

Die erfindungsgemäßen Pigmentpasten weisen Pigment- und/oder Füllstoff/Pastenharzplus Epoxidverbindung-Festkörpergewichtsverhältnisse beispielsweise von 2 : 1 bis 10 : 1 auf. Der Festkörpergehalt der erfindungsgemäßen Pigmentpasten liegt beispielsweise bei 40 bis 65 Gew.-%. Die erfindungsgemäßen Pigmentpasten sind sehr sedimentationsstabil, auch über längere Lagerungszeiträume hinweg, beispielsweise mehr als 6 Monate. Es ist vorteilhaft, daß nur wenig titrierbare Säure in mit den erfindungsgemäßen Pigmentpasten hergestellte KTL-Überzugsmittel gelangt.

Die Erfindung betrifft auch die Verwendung der erfindungsgemäßen Pigmentpasten zur Herstellung von KTL-Überzugsmitteln sowie die KTL-Überzugsmittel.

Durch Vermischen der erfindungsgemäßen Pigmentpasten mit KTL-Bindemitteldispersionen im Festkörpergewichtsverhältnis beispielsweise von 1 : 1 bis 1 : 10 können erfindungsgemäße KTL-Überzugsmittel hergestellt werden. Beispielsweise können beim Anwender KTL-Bäder durch Verdünnen mit Wasser neuerstellt werden oder es kann eine Festkörperkompensation durch Vermischen mit an Festkörper verarmtem KTL-Badinhalt durchgeführt werden.

KTL-Bindemittel und gegebenenfalls Vernetzer enthaltende KTL-Dispersionen, die zur Herstellung von KTL-Bädern eingesetzt werden können, sind bekannt. Bei den KTL-Bindemitteln handelt es sich um Bindemittel, die kationische oder in kationische Gruppen überführbare basische Gruppen, z.B. Amino-, Ammonium-, z.B. quartäre Ammonium-, Phosphonium- und/oder Sulfonium-Gruppen tragen. Bevorzugt sind KTL-Bindemittel mit basischen Gruppen, besonders bevorzugt mit stickstoffhaltigen basischen Gruppen, wie Aminogruppen. Diese Gruppen können quaternisiert vorliegen oder sie werden mit einem üblichen Neutralisationsmittel, z.B. einer organischen Monocarbonsäure, wie z.B. Milchsäure, Ameisensäure, Essigsäure, oder einer Sulfonsäure wie z.B. Amidosulfonsäure, N-Alkylamidosulfonsäure, Methansulfonsäure, wie dem Fachmann geläufig, in kationische Gruppen überführt. Solche basischen Harze sind beispielsweise primäre, sekundäre und/oder tertiäre Aminogruppen enthaltende Harze. Die Aminzahlen solcher Harze liegen z.B. bei 20 bis 250 mg KOH/g. Das Gewichtsmittel der Molmasse (Mw) der Harze liegt bevorzugt bei 300 bis 10000.

Beispiele für KTL-Bindemittel sind Amino(meth)acrylatharze, Aminopolyurethanharze, aminogruppenhaltige Polybutadienharze, Aminoepoxidharze, sowie Epoxidharz-Kohlendioxid-Amin-Umsetzungsprodukte. Die KTL-Bindemittel können selbstvemetzend sein oder sie werden mit bekannten Vernetzern im Gemisch eingesetzt. Beispiele für solche Vernetzer sind Aminoplastharze, Vernetzer mit endständigen Doppelbindungen, Polyepoxidverbindungen, Vernetzer, die umesterungsfähige und/oder umamidierungsfähige Gruppen enthalten, und insbesondere blockierte Polyisocyanate.

KTL-Dispersionen können hergestellt werden durch Synthese von kationische Gruppen oder in kationische Gruppen überführbare Gruppen enthaltenden Bindemitteln (KTL-Bindemittel) in Anwesenheit oder Abwesenheit organischer Lösemittel und Überführung in eine wäßrige Dispersion durch Verdünnen der zuvor mit Säure neutralisierten Bindemittel mit Wasser. Das oder die KTL-Bindemittel können im Gemisch mit einem oder mehreren geeigneten Vernetzern vorliegen und gemeinsam mit diesen in die wäßrige Dispersion überführt werden. Organisches Lösemittel kann, sofern vorhanden, vor oder nach Überführung in die wäßrige Dispersion bis zum gewünschten Gehalt entfernt werden, beispielsweise durch Destillation im Vakuum. Die nachträgliche Entfernung von Lösemitteln kann beispielsweise vermieden werden, wenn die gegebenenfalls im Gemisch mit Vernetzern vorliegenden KTL-Bindemittel im lösemittelarmen oder -freien Zustand, z.B. als lösemittelfreie Schmelze bei Temperaturen von beispielsweise bis zu 140°C mit Säure neutralisiert und anschließend mit Wasser in die KTL-Dispersion überführt werden. Ebenfalls ist es möglich, die Entfernung organischer Lösemittel zu vermeiden, wenn die KTL-Bindemittel als Lösung in einem radikalisch polymerisierbaren, olefinisch ungesättigten Monomeren vorgelegt werden oder die Bindemittelsynthese in einem radikalisch polymerisierbaren Monomeren (z.B. Styrol) als Lösemittel durchgeführt wird, danach durch Neutralisation mit Säure und Verdünnen mit Wasser in eine wäßrige Dispersion überführt wird und anschließend das radikalisch polymerisierbare Monomere auspolymerisiert wird.

KTL-Dispersionen besitzen Festkörpergehalte beispielsweise von 30 bis 45 Gew.-% und einen Gehalt an organischen Lösemitteln von bevorzugt unter 5 Gew.-%, bezogen auf den Dispersionsfestkörper.

Bei den unter Verwendung der erfindungsgemäßen Pigmentpasten hergestellten KTL-Überzugsmitteln handelt es sich bevorzugt um wäßrige Überzugsmittel mit einem Festkörper von 10 bis 30 Gew.-%, beispielsweise 10 bis 20 Gew.-%. Dieser setzt sich zusammen aus dem Harzfestkörper, bestehend aus den KTL-Bindemitteln, dem oder den Pastenharzen, den Epoxidverbindungen, deren Epoxidgruppen verbraucht worden sind, und gegebenenfalls vorhandenen Vernetzern, aus Pigmenten und/oder Füllstoffen und nichtflüchtigen lacküblichen Additiven. Das Pigment/Harzfestkörper-Gewichtsverhältnis der KTL-Überzugsmittel beträgt beispielsweise 0,01 : 1 bis 0,7 : 1, wobei Füllstoffe mit zu Pigmenten gerechnet werden.

Die KTL-Überzugsmittel können übliche Additive enthalten, wie sie insbesondere für KTL-Überzugsmittel bekannt sind. Beispiele dafür sind Netzmittel, Verlaufsmittel, Katalysatoren, Korrosionsinhibitoren, Antischaummittel, Lösemittel.

Aus den erfindungsgemäßen KTL-Überzugsmitteln abgeschiedene KTL-Überzugsschichten sind unempfindlich gegenüber Oberflächenstörungen, beispielsweise Krater verursachenden Substanzen. Aus den erfindungsgemäßen KTL-Überzugsmitteln können auf elektrisch leitfähigen Substraten KTL-Überzüge mit guter Kantenabdeckung abgeschieden werden.

Die erfindungsgemäßen KTL-Überzugsmittel können durch kathodische Elektroabscheidung im Rahmen einer Einschicht- oder Mehrschichtlackierung auf verschiedene elektrisch leitfähige oder elektrisch leitfähig gemachte Substrate, insbesondere metallische Substrate aufgebracht und eingebrannt werden. Die KTL-Überzugsmittel eignen sich insbesondere auf dem Kraftfahrzeugsektor, beispielsweise zur Grundierung von Kraftfahrzeugkarosserien oder Kraftfahrzeugkarosserieteilen.

### Beispiele

### Beispiel 1 (Herstellung einer Pigmentpaste. Vergleich)

Zu 223 g der 55 gewichtsprozentigen organischen Lösung des tertiäre Aminogruppen enthaltenden Pastenharzes nach EP-A-0 469 497 A1, Beispiel 1 (Aminoepoxidpastenharz, erhalten durch Wasserabspaltung aus einem mit Paraformaldehyd methylolierten Umsetzungsprodukt von 2-Ethylhexylamin, aliphatischem Epoxidharz, Bisphenol A-Epoxidharz und 3-Dimethylamino-1-propylamin) werden unter einem schnellaufenden Rührwerk 15 g Essigsäure (50 %), 30 g eines handelsüblichen Netzmittels (50 %) und 350 g deionisiertes Wasser gegeben. Es werden 12,3 g Ruß und 430 g Titandioxid zugegeben. Mit deionisiertem Wasser wird auf einen eine geeignete Mahlviskosität aufweisenden Festkörpergehalt von 53 Gew.-% eingestellt und auf einer Perlmühle vermahlen. Es entsteht eine Pigmentpaste mit einer Viskosität (DIN 53211/20 °C) von 20 Sekunden. Säure-Base-Titration der Pigmentpaste ergibt einen Gehalt von 21,6 Milliäquivalenten Säure pro 100 g Festkörper.

### Beispiel 2 (Herstellung einer Pigmentpaste. Vergleich)

Beispiel 1 wird wiederholt, wobei vor Zugabe der Pigmente 12 g eines aromatischen Epoxidharzes (Epikote^{R} 828 von Shell, Epoxidäquivalentgewicht 188) unter dem Dissolver gut einhomogenisiert werden. Dem zwei Tage gelagerten Produkt werden 12,3 g Ruß und 430 g Titandioxid zugegeben. Nach Einstellen eines Festkörpergehaltes von 53 Gew.-% mit deionisiertem Wasser wird keine geeignete Mahlviskosität erreicht. Durch weiteres Verdünnen mit deionisiertem Wasser auf einen Festkörpergehalt von 50 Gew.-% wird eine geeignete Mahlviskosität erreicht. Nach Vermahlen auf einer Perlmühle entsteht eine Pigmentpaste mit einer Viskosität (DIN 53211/20 °C) von 20 Sekunden. Säure-Base-Titration der Pigmentpaste ergibt einen Gehalt von 15,8 Milliäquivalenten Säure pro 100 g Festkörper.

### Beispiel 3 (Herstellung einer Pigmentpaste. erfindungsgemäß)

Beispiel 1 wird wiederholt. Der 53 gewichtsprozentigen Pigmentpaste werden 12 g eines aromatischen Epoxidharzes (Epikote^{R} 828 von Shell, Epoxidäquivalentgewicht 188) zugegeben und unter dem Dissolver gut einhomogenisiert. Mit deionisiertem Wasser wird auf einen Festkörpergehalt von 53 Gew.-% eingestellt und zwei Tage gelagert. Es entsteht eine Pigmentpaste mit einer Viskosität (DIN 53211/20 °C) von 80 Sekunden. Säure-Base-Titration der Pigmentpaste ergibt einen Gehalt von 16,2 Milliäquivalenten Säure pro 100 g Festkörper.

Die Pigmentpasten aus den Beispielen 1 bis 3 wurden jeweils in 100 ml-Standzylinder abgefüllt und verschlossen bei 20 °C gelagert. Die Proben wurden auf beginnende Sedimentierung beobachtet: Pigmentpaste 1, beginnende Bodensatzbildung nach 28 Tagen; Pigmentpaste 2, beginnende Bodensatzbildung nach 42 Tagen; Pigmentpaste 3, nach 6 Monaten keine Bodensatzbildung erkennbar.

### Beispiele 4a-c (Herstellung von KTL-Bädern und -Beschichtungen)

Durch Vermischen einer KTL-Bindemittel (Aminoepoxidharz) und Vernetzer (blockiertes Polyisocyanat) sowie Zinnkatalysator enthaltenden KTL-Dispersion mit einem Festkörpergehalt von 35 Gew. % mit deionisiertem Wasser und Zusatz der Pigmentpasten aus den Beispielen 1, 2 bzw. 3 unter gutem Rühren werden in üblicher Weise KTL-Bäder 4a, 4b (jeweils Vergleich) bzw. 4c (erfindungsgemäß) mit einem Festkörpergehalt von jeweils 20 Gew.-% und einem Pigment/Bindemittel-Gewichtsverhältnis von jeweils 0,3 : 1 hergestellt. Aus den KTL-Bädern werden gelochte Bleche aus üblichem phosphatiertem Karosseriestahl in 20 µm Trockenschichtdicke kataphoretisch beschichtet und 30 Minuten bei 180°C eingebrannt. Die so beschichteten Bleche wurden einem 480-stündigen Salzsprühtest nach DIN 53167 unterzogen. Es ergaben sich folgende Korrosionsangriffe an den Lochkanten: 4a, 80 %; 4b, 40 %, 4c, 45 %.

Die KTL-Bäder 4a, 4b bzw. 4c werden jeweils bezogen auf ihren Festkörpergehalt mit 0,25% ASTM-Öl Nr.1 (Handelsprodukt der Fuchs Mineralölwerke GmbH, Mannheim) als kraterverursachendes Mittel verunreinigt. Aus den KTL-Bädern werden übliche phosphatierte Karosseriestahlbleche in 20 µm Trockenschichtdicke kataphoretisch beschichtet und 30 Minuten bei 180°C eingebrannt. Die Anzahl der Krater pro Quadratdezimeter beschichteter Fläche wurde jeweils bestimmt: 4a, 12 Krater; 4b, 2 Krater; 4c, 2 Krater.

## Patentansprüche

1. Pigmentpaste, erhältlich durch Dispergieren von Pigmenten und/oder Füllstoften In einem wäßrigen Pastenharz, das tertiär gebundenen Aminostickstoff enthält, **dadurch gekennzeichnet, daß** anschließend an das Dispergieren Polyepoxidverbindungen und, falls nicht bereits geschehen, Säure zugesetzt werden.

2. Pigmentpaste nach Anspruch 1, **dadurch gekennzeichnet, daß** es sich bei dem Pastenharz mit tertiär gebundenem Aminostickstoff um Amino(meth)acrylatharze, Aminopolyurethanharze oder Aminoepoxidharze handelt.

3. Verfahren zur Herstellung der wäßrigen Pigmentpasten nach Anspruch 1 oder 2, bei dem man Pigmente und/oder Füllstoffe in einem wäßrigen Pastenharz, das tertiär gebundenen Aminostickstoff enthält, disperglert, **dadurch gekennzeichnet, daß** man anschließend Polyepoxidverbindungen und, falls nicht bereits geschehen, Säure zusetzt.

4. Verfahren nach Anspruch 3, **dadurch gekennzeichnet, daß** der Zusatz der Polyepoxidverbindungen in einer 15 bis 80 Milliäquivalenten Epoxid pro 100 g der Mischung aus Pastenharz und Polyepoxidverbindungen entsprechenden Menge erfolgt.

5. Kathodisch abscheldbare Elektrotauchlacküberzugsmittel (KTL), enthaltend eine Pigmentpaste nach Anspruch 1 oder 2.

6. KTL-Überzugsmittel nach Anspruch 5, **dadurch gekennzeichnet, daß** sich das Pastenharz der Pigmentpaste von in dem KTL-Überzugsmittel enthaltenen Bindemitteln unterscheidet.

7. Verwendung der Pigmentpasten nach Anspruch 1 oder 2 zur Herstellung von KTL-Überzugsmitteln.

8. Verwendung der KTL-Überzugsmittel nach Anspruch 5 oder 6 zur Herstellung von Überzügen.

9. Überzugsschicht, erhalten unter Verwendung eines KTL-Überzugsmittels nach Anspruch 5 oder 6.

## Claims

1. Pigment paste obtainable by dispersion of pigments and/or fillers in an aqueous paste resin which contains tertiary-bonded amino nitrogen, **characterised in that** subsequently to the dispersion polyepoxide compounds and, unless this has already taken place, acid are added.

2. Pigment paste according to Claim 1, **characterised in that** the paste resin having tertiary-bonded amino nitrogen is amino (meth)acrylate resins, amino polyurethane resins or amino epoxide resins.

3. Process for the preparation of the aqueous pigment pastes according to Claim 1 or 2, in which pigments and/or fillers are dispersed in an aqueous paste resin which contains tertiary-bonded amino nitrogen, **characterised in that** subsequently polyepoxide compounds and, unless this has already taken place, acid are added.

4. Process according to Claim 3, **characterised in that** the addition of the polyepoxide compounds is effected in a quantity which corresponds to 15 to 80 milliequivalents epoxide per 100 g of the mixture of paste resin and polyepoxide compounds.

5. Electrophoretic lacquer coating composition capable of being applied by electrodeposition, which contains a pigment paste according to Claim 1 or 2.

6. Electrophoretic coating composition according to Claim 5, **characterised in that** the paste resin of the pigment paste differs from binders contained in the electrophoretic coating composition.

7. Use of the pigment pastes according to Claim 1 or 2 for the preparation of electrophoretic coating compositions.

8. Use of the electrophoretic coating compositions according to Claim 5 or 6 for the production of coatings.

9. Coating film obtained with the use of an electrophoretic coating composition according to Claim 5 or 6.

## Revendications

1. Pâte pigmentaire pouvant être obtenue par dispersion de pigments et/ou de matières de charge dans une résine en pâte aqueuse qui contient de l'azote aminé à liaison tertiaire, **caractérisée en ce que**, après la dispersion, on ajoute des composés polyépoxydiques et, si cela n'a pas déjà été fait, de l'acide.

2. Pâte pigmentaire selon la revendication 1, **caractérisée en ce que** la résine en pâte contenant de l'azote aminé à liaison tertiaire comprend des résines d'amino(méth)acrylates, des résines d'aminopolyuréthane ou des résines d'aminoépoxydes.

3. Procédé de préparation des pâtes pigmentaires aqueuses selon la revendication 1 ou la revendication 2, dans lequel on disperse des pigments et/ou des matières de charge dans une résine en pâte aqueuse qui contient de l'azote aminé à liaison tertiaire, **caractérisé en ce que** l'on ajoute ensuite des composés polyépoxydiques et, si cela n'a pas déjà été fait, de l'acide.

4. Procédé selon la revendication 3, **caractérisé en ce que** l'ajout des composés polyépoxydiques se fait en une quantité correspondant à 15 à 80 milliéquivalents d'époxyde pour 100 g du mélange de résine en pâte et de composés polyépoxydiques.

5. Agent de revêtement pour peinture cataphorétique par immersion (KTL), contenant une pâte pigmentaire selon la revendication 1 ou la revendication 2.

6. Agent de revêtement KTL selon la revendication 5, **caractérisé en ce que** la résine en pâte de la pâte pigmentaire est différente des liants contenus dans l'agent de revêtement KTL.

7. Utilisation des pâtes pigmentaires selon la revendication 1 ou la revendication 2 pour préparer des agents de revêtement KTL.

8. Utilisation des agents de revêtement KTL selon la revendication 5 ou la revendication 6 pour réaliser des revêtements.

9. Couche de revêtement obtenue en utilisant un agent de revêtement KTL selon la revendication 5 ou la revendication 6.
